# EUROPEAN PATENT SPECIFICATION

(11) **EP 3 140 929 B1**
(45) Date of publication and mention of the grant of the patent: **17.03.2021**
(21) Application number: 14891246.2
(22) Date of filing: 06.05.2014
(51) Int. Cl.: H04J 11/00

(54) **INTERFERENCE CANCELLATION FOR SIGNALS HAVING THE SAME RADIO-FREQUENCY CARRIER AND TRANSMITTED AT THE SAME TIME**
INTERFERENZUNTERDRÜCKUNG FÜR SIGNALE MIT DEMSELBEN FUNKFREQUENZTRÄGER UND DERSELBEN SENDEZEIT
SUPPRESSION D'INTERFÉRENCE POUR DES SIGNAUX AYANT LA MÊME PORTEUSE RADIOFRÉQUENCE ET TRANSMIS AU MÊME MOMENT

(43) Date of publication of application: 15.03.2017
(73) Proprietor: Intel Corporation, Santa Clara, CA 95054 (US)
(72) Inventor: CHOI, Yang-Seok, Portland, Oregon 97229 (US); ARYAFAR, Ehsan, Santa Clara, California 95148 (US); TALWAR, Shilpa, Cupertino, CA 95014 (US)
(74) Representative: HGF
(86) International application number: PCT/US2014/036966
(87) International publication number: WO 2015/171119

(56) References cited:
- WO-A1-2013/173250
- WO-A1-2014/037742
- US-A1- 2011 195 704
- US-A1- 2013 121 186
- US-A1- 2013 194 984
- US-A1- 2014 016 516
- US-A1- 2015 078 212
- US-B1- 7 817 641
- DUARTE, MELISSA ET AL.: 'Full-duplex wireless communications using off-the- shelf radios: Feasibility and first results' 2010 CONFERENCE RECORD OF THE FORTY FOURTH ASILOMAR CONFERENCE ON SIGNALS, SYSTEMS AND COMPUTERS (ASILOMAR, [Online] 07 November 2010, XP055149178 Retrieved from the Internet: <URL:http://ieeexplore.ieee.org/xpls/abs_al l.jsp?arnumber=5757799>

## Description

### TECHNICAL FIELD

Embodiments pertain to wireless communications. Some embodiments relate to transmission of signals in wireless networks including those networks that operate based on a 3GPP Evolved Universal Terrestrial Radio Access Network (E-UTRAN) Long-Term-Evolution (LTE-A) advanced network standard and networks that operate based on IEEE 802.11 standards.

### BACKGROUND

Conventional wireless communication networks use several techniques for transmission of different signals, such as downlink and uplink signals. For example, in frequency division duplexing (FDD), different signals may be transmitted at the same time using different radio-frequency carriers. In time division duplexing (TDD), different signals may be transmitted at the same radio- frequency carrier but at different time slots. As described below in the detailed description, a technique different from FDD and TDD may be used. In some situations, interference may occur in signals transmitted using such a technique. Thus, the integrity of signals at the receiving devices may be compromised if the devices employ no solution to deal with such interference. Moreover, lack of interference solution may place a constraint on some operations in a network station communicating with those devices.

US 2011/0195704 describes a communication system for performing uplink communication and downlinks communication using overlapping radio resource.

US 2013/0121186 relates to uplink transmission with interference mitigation.

### BRIEF DESCRIPTION OF THE DRAWINGS

FIG. 1 is a block diagram of a wireless communication network including a network station and wireless communication devices, according to some embodiments described herein.
FIG. 2 is a block diagram showing example signals communicated between the network station and each of the wireless communication devices of FIG. 1, according to some embodiments described herein.
FIG. 3 is a block diagram of a wireless communication device including a receiver and an interference cancellation unit, according to some embodiments described herein.
FIG. 4 is a flow chart showing a method of operating a wireless communication device, according to some embodiments described herein.
FIG. 5 is a block diagram of a wireless communication device including a module, according to some embodiments described herein.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. The scope of the invention is defined in the appended claims.

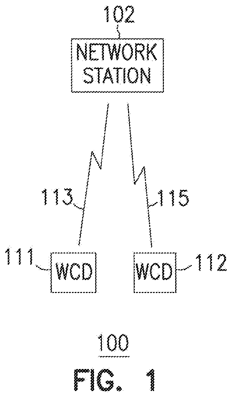

FIG. 1 shows a wireless communication network 100 including a network station 102 and wireless communication devices 111 and 112, according to some embodiments described herein. Network station 102 may be arranged (e.g., configured) to wirelessly communicate with wireless communication device (WCD) 111 through a wireless connection 113 and with WCD 112 through a wireless connection 115.

An example of wireless communication network 100 includes an Evolved Universal Terrestrial Radio Access Network (E-UTRAN) using the 3rd Generation Partnership Project (3GPP) Long Term Evolution (LTE) standards. Additional examples of wireless communication network 100 include Worldwide Interoperability for Microwave Access (WiMax) networks, 3rd Generation (3G) networks, Wi-Fi networks, and other wireless data communication networks.

An example of network station 102 includes a base station (BS), an Enhanced Node B (eNB), an Access Point (AP), or another type of network station or network equipment. Network station 102 may be arranged to operate based on the 3GPP-LTE standards or other wireless data communication standards.

In some embodiments, network station 102 may be configured to transmit orthogonal frequency division multiplexed (OFDM) communication signals over a multicarrier communication channel in accordance with an orthogonal frequency division multiple access (OFDMA) communication technique. The OFDM signals may comprise a plurality of orthogonal subcarriers. In some embodiments, the OFDMA communication technique may be either an FDD technique that uses different uplink and downlink spectrum or a TDD technique that uses the same spectrum for uplink and downlink.

In some embodiments, wireless communication network 100 may operate based on IEEE 802.11 standards including IEEE 802.11 High Efficiency WLAN (HEW) standard. In such HEW embodiments, network station 102 may include an access point that may operate as a master station which may be arranged to contend for a wireless medium (e.g., during a contention period) to receive exclusive control of the medium for an HEW control period (i.e., a transmission opportunity (TXOP)). The master station may transmit an HEW master-sync transmission at the beginning of the HEW control period. During the HEW control period, HEW stations may communicate with the master station in accordance with a non-contention based multiple access technique. This is unlike conventional Wi-Fi communications in which devices communicate in accordance with a contention-based communication technique, rather than a multiple access technique. During the HEW control period, the master station may communicate with HEW stations using one or more HEW frames. During the HEW control period, legacy stations refrain from communicating. In some embodiments, the master-sync transmission may be referred to as an HEW control and schedule transmission.

In some embodiments, the multiple-access technique used during the HEW control period may be a scheduled OFDMA technique, although this is not a requirement. In some embodiments, the multiple access technique may be a time-division multiple access (TDMA) technique or a frequency division multiple access (FDMA) technique. In some embodiments, the multiple access technique may be a space-division multiple access (SDMA) technique.

The master station may also communicate with legacy stations in accordance with legacy IEEE 802.11 communication techniques. In some embodiments, the master station may also be configurable communicate with HEW stations outside the HEW control period in accordance with legacy IEEE 802.11 communication techniques, although this is not a requirement.

In some embodiments, the links of an HEW frame may be configurable to have the same bandwidth and the bandwidth may be one of 20MHz, 40MHz, 80MHz or 160MHz. In some embodiments, a 320MHz bandwidth may be used. In some embodiments, bandwidths of 5MHz and/or 10MHz may also be used. In these embodiments, each link of an HEW frame may be configured for transmitting a number of spatial streams.

In FIG. 1, examples of WCDs 111 and 112 include user equipment (UE) and terminal equipment (e.g., data terminal equipment). Examples of user equipment and terminal equipment include cellular telephones (e.g., smartphones), tablet computers, e-readers (e.g., e-book readers), notebook computers, laptop computers, desktop computers, personal computers, servers, personal digital assistants (PDAs), digital cameras, medical devices (e.g., a heart rate monitor, a blood pressure monitor, etc.), televisions, web appliances, set-top boxes (STBs), network routers, network switches, network bridges, parking meters, sensors, and other types devices and equipment.

WCDs 111 and 112 may be arranged (e.g., configured) to operate based on the 3GPP-LTE standards or other wireless data communication standards. FIG. 1 shows wireless communication network 100 including only two WCDs (WCDs 111 and 112) to communicate with network station 102 as an example. Wireless communication network 100, however, may include more than two WCDs.

Network station 102 may have a simultaneous transmit (Tx) and receive (Rx) capability (STR capability), such that it may operate in STR mode (e.g., full-duplex mode) to simultaneously (e.g., concurrently) transmit and receive signals (e.g., radio-frequency (RF) signals). Network station 102 may include an RF transceiver that has a full-duplex capability that may operate in full-duplex mode to simultaneously transmit and receive signals. For example, network station 102 may transmit a downlink (DL) signal to WCD 111 while network station 102 receives an uplink (UL) signal from WCD 112 at the same time at the same RF carrier. In another example, network station 102 may transmit a DL signal to WCD 112 while network station 102 receives a UL signal from WCD 111.

Network station 102 and WCDs 111 and 112 may be arranged to operate such that a DL signal (e.g., transmitted by network station 102) and a UL signal (e.g., transmitted by WCD 111 or 112) may be transmitted at the same time at the same RF carrier (e.g., a single RF carrier). This technique may allow wireless communication network 100 to increase (e.g., double) its handing capacity in comparison with other techniques, such as FDD and TDD.

In some situations, a UL signal transmitted by one WCD may cause interference in a DL signal transmitted by network station 102 to another WCD when the DL and UL signals have the same RF carrier and are transmitted at the same time. For example, if WCDs 111 and 112 are near each other, a DL signal (transmitted by network station 102) received by one of the WCDs 111 and 112 (e.g., WCD 111) may be interfered with by a stronger UL signal transmitted by the other WCD (e.g., WCD 112). To overcome interference in such a situation, each of WCDs 111 and 112 may employ components to perform an interference cancellation operation to cancel (e.g., reduce or eliminate) the interference, as described in more detail below.

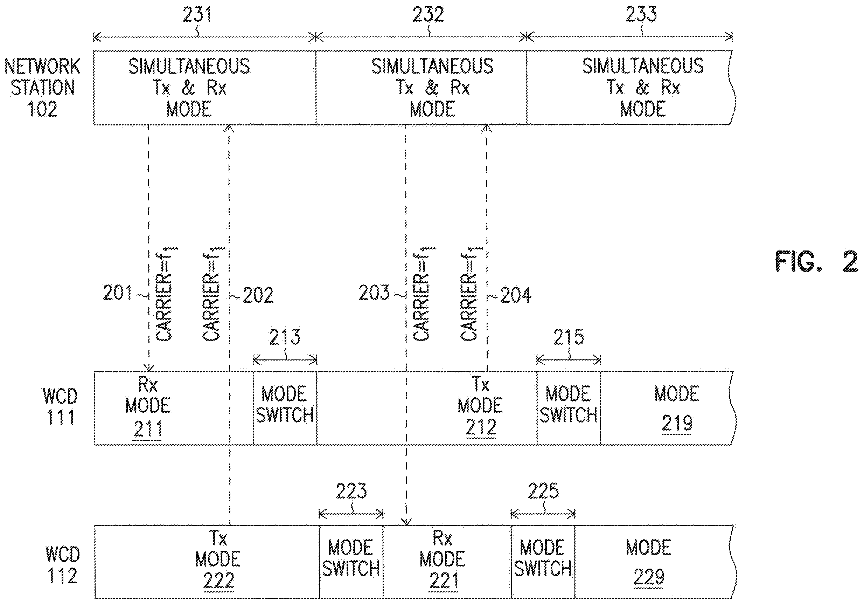

FIG. 2 is a diagram showing example signals communicated between network station 102 and each of WCD 111 and 112 of FIG. 1, according to some embodiments described herein. As shown in FIG. 2, during a time interval 231, network station 102 may operate in STR mode to transmit a signal (e.g., DL signal) 201 to WCD 111 and to receive a signal (e.g., UL signal) 202 transmitted by WCD 112. Signals 201 and 202 may have the same RF carrier f₁. During a time interval 232, network station 102 may also operate in STR mode to transmit a signal (e.g., DL signal) 203 to WCD 112 and to receive a signal (e.g., UL signal) 204 transmitted by WCD 111. Signals 204 and 203 may also have the same RF carrier f₁. During a time interval 233, network station 102 may also operate in STR mode to simultaneously transmit and receive additional signals (not shown).

WCD 111 may or may not have the STR capability. If WCD 111 does not have the STR capability, it may be a half-duplex device that operates in a half-duplex mode, such as in only Rx mode or in only Tx mode but not in both modes at the same time at the same RF carrier. WCD 111 may switch from one mode to another depending on whether it receives or transmits signals. For example, WCD 111 may switch from an Rx mode 211 to a Tx mode 212 during a time interval 213. WCD 111 may switch from Tx mode 212 to a mode 219 during a time interval 215. Thus, in the example of FIG. 2, if WCD 111 does not have the STR capability, it may operate in a half-duplex mode (e.g., Rx mode 211) during time interval 231 to receive signal 201 and subsequently operate in a half-duplex mode (e.g., Tx mode 212) during time interval 232 to transmit signal 204.

If WCD 111 has the STR capability, it may be a full-duplex device that has the capability of operating in STR mode (both Rx and Tx modes at the same time at the same RF carrier). In some cases, although WCD 111 may have the STR capability, it may operate in only Rx mode (e.g., during time interval 231), or in only Tx mode (e.g., during time interval 232). If WCD 111 has the STR capability, it may switch between a half-duplex mode (e.g., Rx mode 211 or Tx mode 212) and a full-duplex mode (e.g., mode 219). Thus, in the example of FIG. 2, if WCD 111 has the STR capability, it may operate in a half-duplex mode (e.g., Rx mode 211) during time interval 231 to receive signal 201, operate in a half-duplex mode (e.g., Tx mode 212) during time interval 232 to transmit signal 204, or operate in a full-duplex mode 219 (e.g., STR mode) to simultaneously transmit and receive signals (not shown).

WCD 112 may or may not have the STR capability. If WCD 112 does not have the STR capability, it may be a half-duplex device that operates in a half-duplex mode, such as in only Rx mode or in only Tx mode but not in both modes at the same time. WCD 112 may switch from one mode to another depending on whether it receives or transmits signals. For example, WCD 112 may switch from a Tx mode 222 to an Rx mode 221 during a time interval 223. WCD 112 may switch from Rx mode 221 to a mode 229 during a time interval 225. Thus, in the example of FIG. 2, if WCD 112 does not have the STR capability, it may operate in a half-duplex mode (e.g., Tx mode 222) during time interval 231 to transmit signal 202 and subsequently operate in a half-duplex mode (e.g., Rx mode 221) during time interval 232 to receive signal 203.

If WCD 112 has the STR capability, it may be a full-duplex device that has the capability of operating in STR mode (both Rx and Tx modes at the same time). In some cases, although WCD 112 may have the STR capability, it may operate in only Tx mode (e.g., during time interval 231), or in only Rx mode (e.g., during time interval 232). If WCD 112 has the STR capability, it may switch between a half-duplex mode (e.g., Rx mode 221 or Tx mode 222) and a full-duplex mode (e.g., mode 229). Thus, in the example of FIG. 2, if WCD 112 has the STR capability, it may operate in a half-duplex mode (e.g., Tx mode 222) during time interval 231 to transmit signal 202, operate in a half-duplex mode (e.g., Rx mode 221) during time interval 232 to receive signal 203, or operate in a full-duplex mode 229 (e.g., STR mode) to simultaneously transmit and receive signals (not shown).

As mentioned above with reference to FIG. 1, in some situations, a UL signal transmitted by one WCD may cause interference to a DL signal received by another WCD when the DL and UL signals have the same RF carrier and are transmitted at the same time. In FIG. 2, such a situation may happen during time interval 231 or 232 in FIG. 2. For example, if WCDs 111 and 112 are near each other during time interval 231, signal 201 (e.g., DL signal) received by WCD 111 may be interfered with by a stronger signal 202 (e.g., UL signal) transmitted by WCD 112. In another example, if WCDs 111 and 112 are near each other during time interval 232, signal 203 (e.g., DL signal) received by WCD 112 may be interfered with by a stronger signal 204 (e.g., UL signal) transmitted by WCD 111.

In the above examples, WCD 111 may perform an interference cancellation operation during time interval 231 to cancel interference caused by signal 202 to signal 201. WCD 112 may perform an interference cancellation operation during time interval 232 to cancel interference caused by signal 204 to signal 203. The interference cancellation operation employed by WCD 111 and WCD 112 may improve or maintain the accuracy of information (e.g., data) associated with the signal (e.g., signal 201 or 203) received by the receiving WCD.

In addition, the interference cancellation operation employed by WCD 111 and WCD 112 may also improve some of the operations in network station 102. For example, network station 102 may include a scheduler to schedule transmissions of DL and UL signals. Without the interference cancellation operation employed by the WCD (e.g., WCD 111 or 112) described herein, network station 102 may schedule transmissions of DL and UL signals such that any two WCDs (one for receiving a DL signal and the other for transmitting a UL signal) should have enough distance between them (e.g., should not be near each other) to avoid WCD-to-WCD interference. This distance factor may place a constraint in scheduler design in network station 102. For example, without the interference cancellation operation employed by the WCD described herein, network station 102 may not be able to freely select arbitrary WCDs for DL or UL transmission at a particular moment, even if the WCDs need either DL or UL transmission at that particular moment, because a potential WCD-to-WCD interference may occur.

With the interference cancellation operation employed by the WCD (e.g., WCD 111 or 112) described herein, the above-mentioned constraint may be removed from the scheduling operation in network station 102 because WCD-to-WCD interference (if it occurs) may be cancelled by the interference cancellation operation described herein. Thus, latency of signal (e.g., data packet) delivery may be improved and scheduler design may be simpler for network station 102.

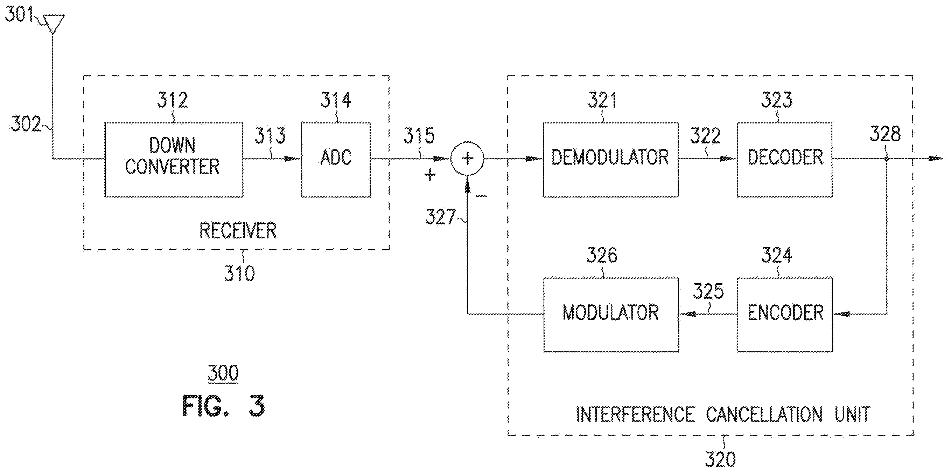

FIG. 3 shows a block diagram of a WCD 300 including a receiver 310 and an interference cancellation unit 320, according to some embodiments described herein. WCD 300 may correspond to WCD 111 or WCD 112 of FIG. 1. Thus, WCD 111 or WCD 112 may include components and operations of WCD 300. Receiver 310 may operate to receive a DL signal from a network station (e.g., network station 102 in FIG. 1). Interference cancellation unit 320 may operate to perform an interference cancellation operation to cancel interference in the DL signal that may be caused by another signal (e.g., a UL signal) from another device near WCD 300. The interference cancellation operation performed by interference cancellation unit 320 may include a successive interference cancellation (SIC) operation. Thus, interference cancellation unit 320 may include components to perform an SIC operation. For simplicity, FIG. 3 omits some of the components that may be used in an SIC operation.

As shown in FIG. 3, WCD 300 may include an antenna 301 to receive an RF signal 302. Receiver 310 may include a down converter 312 to down-convert signal 302 and generate a baseband signal 313, and an analog-to- digital converter (ADC) 314 to receive baseband signal 313 and generate a received signal 315, which includes a baseband digital signal.

Signal 302 received by antenna 301 may include a DL signal (e.g., signal 201 in FIG. 2) transmitted by a network station (e.g., network station 102 in FIG. 1) intended for WCD 300. In some situations, however, signal 302 may also include another signal in addition to the DL signal. For example, if a UL signal (e.g., signal 202 in FIG. 2) having the same RF carrier as the DL signal is transmitted by another device while the DL signal is being transmitted, the UL signal may interfere with the DL signal if that device is near enough to WCD 300 to cause the interference. Thus, in this example, signal 302 may include both the information associated with the DL signal intended for WCD 300 and the information associate with the UL signal that causes the interference.

Interference cancellation unit 320 may include a demodulator 321 to demodulate received signal 315 and generate a demodulated signal 322, and a decoder 323 to decode demodulated signal 322 to generate a decoded signal 328. Interference cancellation unit 320 may obtain interference information (e.g., information associated with the signal (e.g., UL signal) that causes the interference) based on decoded signal 328. Interference cancellation unit 320 may then regenerate the interference based on the interference information. Interference cancellation unit 320 may also include an encoder 324 to generate an encoded signal 325 (which includes the regenerated interference) based on the interference information included in the decoded signal 328, and a modulator 326 to modulate encoded signal 325 to generate interference cancellation signal 327. Interference cancellation unit 320 may then subtract interference cancellation signal 327 from received signal 315 in order to cancel interference in the DL signal.

Decoded signal 328 may also be used to generate a data signal (not shown) that contains information (e.g., bits of a data stream) associated with the DL signal intended for WCD 300. For example, after interference cancellation signal 327 is subtracted from received signal 315, a resulting signal is generated. Thus, decoded signal 328 may include updated information based on the resulting signal. Then, the data signal may be generated by further decoding the updated information. The data signal may be provided to other components (not shown) of WCD 300 for further processing.

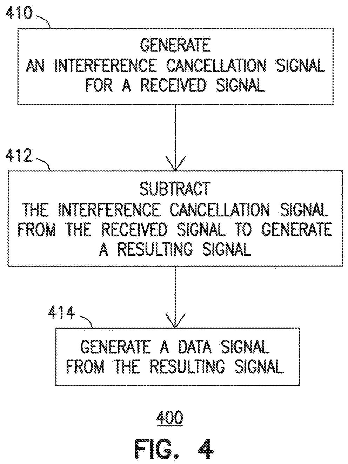

FIG. 4 is a flow chart showing a method 400 of operating a WCD, according to some embodiments described herein. Method 400 may be performed by a WCD, such as WCD 111, 112, or 300 described above or WCD 500 described below. The WCD used in method 400 is incapable of simultaneously transmitting and receiving signals. Alternatively, the WCD used in method 400 is capable of simultaneously transmitting and receiving signals. The WCD used in method 400 may communicate (e.g., by way of DL signal or UL signal, or both) with a network station (e.g., network station 102). The network station is capable of simultaneously transmitting and receiving signals. As shown in FIG. 4, method 400 may include activities 410, 412, and 414.

Activity 410 may include generating an interference cancellation signal for a received signal (e.g., received signal 315 in FIG. 3). Generating the interference cancellation signal in activity 410 may include down-converting an RF signal (e.g., signal 302 in FIG. 3) to generate a down-converted baseband signal, generating a received signal (e.g., a digital baseband signal) based on the baseband signal, demodulating the received signal to generate a demodulated signal, decoding the demodulated signal to generated a decoded signal, obtaining interference information from the decoded signal in order to regenerate the interference, and generating the interference cancellation signal based on the interference information. Activity 410 may also include encoding the interference information to generate an encoded signal (which includes the regenerated interference), and modulating the encoded signal to generate the interference cancellation signal.

Activity 412 of method 400 may include subtracting the interference cancellation signal from the received signal. The subtraction may generate a resulting signal (e.g., the remaining portion the received signal after the interference cancellation signal is subtracted from it).

Activity 414 may include generating a data signal. Generating the data signal may include decoding the resulting signal (generated in activity 412). The data signal may include information associated with a DL signal transmitted to the WCD by a network station. Activity 414 may also include providing the data signal to other components of the WCD for further processing.

Method 400 may include performing an SIC operation, such that one or more of the activities 410, 412, and 414 may be included as part of the SIC operation.

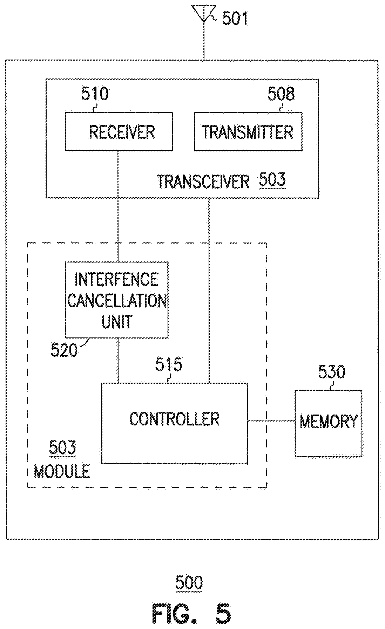

Method 400 may include fewer or more activities than the activities shown in FIG. 4. For example, method 400 may include activities associated with the operations of WCD 111, 112, or 300 described above with reference to FIG. 1 through FIG. 3, and operations of a WCD described below with reference to FIG. 5.

FIG. 5 shows a block diagram of a WCD 500 including a module 502, according to some embodiments described herein. WCD 500 may correspond to WCD 111 or WCD 112 (FIG. 1) or WCD 300 (FIG. 3). Thus, WCD 111, WCD 112, or WCD 300 may include components and operations of WCD 500. As shown in FIG. 5, WCD 500 may also include at least one antenna 501 (e.g., a single antenna or multiple antennas), a transceiver 503 having a transmitter 508 and a receiver 510, and a memory 530. Receiver 510 may correspond to receiver 310 of FIG. 3. Thus, receiver 510 may be arranged to operate in ways similar to, or identical to, those of receiver 310.

Module 502 may include a controller 515 and an interference cancellation unit 520. Interference cancellation unit 520 may correspond to interference cancellation unit 320 of FIG. 3. Thus, interference cancellation unit 520 may be arranged to operate in ways similar to, or identical to, those of interference cancellation unit 320.

WCD 500 may also include one or more of a keyboard, a display (e.g., an LCD screen including a touch screen), a non-volatile memory port (e.g., a Universal Serial Bus (USB) port), speakers, and other mobile device elements.

Module 502 and transceiver 503 may be arranged (e.g., configured) to perform operations described above with reference to FIG. 1 through FIG. 4. For example, receiver 510 may be arranged to receive a DL signal (e.g., signal 201 or 203 in FIG. 2) transmitted by a network station (e.g., network station 102 in FIG. 1). Transmitter 508 may be arranged to transmit a UL signal (e.g., signal 202 or 204 in FIG. 2) to a network station (e.g., network station 102 in FIG. 1).

WCD 500 may be an STR incapable device, such that transceiver 503 may be a half-duplex transceiver. Alternatively, WCD 500 may be an STR capable device, such that transceiver 503 may be full-duplex transceiver.

Module 502 may be arranged to perform an interference cancellation operation to cancel inference to a signal (e.g., signal 201 or 203 in FIG. 2). The interference cancellation operation performed by module 502 may be similar to, or identical to, that described above with reference to FIG. 1 through FIG. 4. Module 502 may use at least one of interference cancellation unit 520 and controller 515 to perform the interference cancellation operation.

Controller 515 may be arranged (e.g., configured) to provide processing and control functionalities for WCD 500, including at least part of the interference cancellation operation described above with reference to FIG. 1 through FIG. 4. Controller 515 may include one or more processors that may include one or more central processing units (CPUs), one or more graphics processing units (GPUs), or a combination of one or more CPUs and one or more GPUs.

Memory 530 may include volatile memory, non-volatile memory, or a combination of both. Memory 530 may store instructions (e.g., firmware programs, software programs, or a combination of both). Controller 515 may execute instructions in memory 530 to result in WCD 500 performing operations such as the interference cancellation operation performed by WCD 111, 112, or 300, described in method 400, described herein with reference to FIG. 1 through FIG. 4.

The at least one antenna 501 may include one or more directional or omnidirectional antennas, including, for example, dipole antennas, monopole antennas, patch antennas, loop antennas, microstrip antennas or other types of antennas suitable for transmission of RF signals. In some embodiments, instead of two or more antennas, a single antenna with multiple apertures may be used. In these embodiments, each aperture may be considered a separate antenna. The at least one antenna 501 may be arranged to support multiple-input and multipleoutput (MIMO) communications. In some MIMO embodiments, the at least one antenna 501 may be effectively separated to benefit from spatial diversity and the different channel characteristics that may result between each of the at least one antenna 501 and the antennas of a transmitting station. In some MIMO embodiments, the at least one antenna 501 may be separated by up to 1/10 of a wavelength or more.

FIG. 5 shows WCD 500 including one transceiver 503 and at least one antenna 501 as an example. The number of transceivers and antennas may vary. Module 502 and transceiver 503 may be arranged to operate in different communication networks, such as a 3GPP-LTE network, a WiMax network, and other communication networks.

In some embodiments, the WCD 500 may be configured to receive (e.g., from network station 102 in FIG. 1) OFDM communication signals in accordance with an OFDMA communication technique. The OFDM signals may comprise a plurality of orthogonal subcarriers.

Although WCD 500 is shown as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, application specific integrated circuits (ASICs), radio-frequency integrated circuits (RFICs) and combinations of various hardware and logic circuitry for performing at least the functions and operations described herein. In some embodiments, the functional elements may refer to one or more processes operating on one or more processing elements.

Embodiments may be implemented in one or a combination of hardware, firmware and software. Embodiments may also be implemented as instructions (e.g., firmware programs, software programs, or a combination of both) stored on a computer-readable storage medium, which may be read and executed by at least one processor to perform the operations described herein. A computer-readable storage medium may include any non-transitory mechanism (e.g., non-transitory computer-readable medium) for storing information (e.g., instructions) in a form readable by a machine (e.g., a computer). Examples of a computer-readable storage medium may include read-only memory (ROM), random-access memory (RAM), magnetic disk storage media, optical storage media, flash-memory devices, and other storage devices and media. In these embodiments, one or more processors of the WCD 500 may be configured with the instructions to perform the operations described herein.

## Claims

1. A wireless communication device (111), WCD, comprising:
a receiver (310) to generate a received signal (315), the received signal (315) including at least a first signal transmitted to the WCD (111) by a network station (102) operating in a full-duplex mode while the WCD (111) operates in a half-duplex mode; and **characterized by**:
a module (320) to generate an interference cancellation signal (327) for the received signal (315) based on interference information obtained from at least the received signal, the interference information associated with a second signal (115) transmitted to the network station (102) by an additional device (112), wherein the first signal by the network station (102) is transmitted to the WCD in the same time interval as the second signal by the additional device (112) is transmitted, and the first and second signals include a same radio-frequency, RF, carrier; and
a subtractor to subtract the interference cancellation signal (327) from the received signal (315) before the received signal is applied to the module.

2. The WCD (111) of claim 1, wherein the first signal includes a downlink signal transmitted by the network station (102) to the WCD (111), and the second signal includes an uplink signal transmitted by the additional device (112) to the network station (102).

3. The WCD (111) of claim 1, wherein the first signal includes a downlink signal transmitted by the network station (102) to the WCD (111) based on an orthogonal frequency division multiple access, OFDMA, communication technique.

4. The WCD (111) of claim 1, wherein the WCD (111) is a half-duplex device, and the network station (102) is arranged to transmit the first signal while the network station receives the second signal.

5. The WCD (111) of any one of claims 1 to 4, wherein the subtractor arranged to:
subtract the interference cancellation signal (327) from the received signal (315) to generate a resulting signal; and
the module is arranged to decode the resulting signal to generate a data signal, the data signal including information associated with the first signal from the network station (102).

6. The WCD (111) of any one of claims 1 to 4, wherein the module (320) is arranged to perform a successive interference cancellation operation to obtain the interference information.

7. The WCD (111) of any one of claims 1 to 4, wherein the receiver (310) is arranged to:
generate a baseband signal based (313) on a signal received by an antenna (301) coupled to the receiver (310); and
generate a digital baseband signal based on the baseband signal (313), wherein the digital baseband signal includes the received signal (315).

8. The WCD (111) of claim 7, wherein the module (320) is arranged to:
demodulate the received signal (315) to generate a demodulated signal (322);
decode the demodulated signal (322) to generate a decoded signal (328); and
obtain the interference information based on the decoded signal (328).

9. The WCD (111) of any one of claims 1 to 4, wherein the network station (102) includes one of a base station and an enhanced node B, eNB.

10. A method (400) of operating a wireless communication device (111), WCD, the method comprising:
generating (410) an interference cancellation signal (327) based at least in part on a received signal at a receiver (310) of the WCD, the received signal including at least a first signal transmitted to the WCD by a network station (102), and the interference cancellation signal (327) including information associated with a second signal transmitted by an additional device (112) to the network station, wherein the first and second signals are transmitted during a same time interval, and the first and second signals include a same radio-frequency, RF, carrier; and
subtracting (412) the interference cancellation signal (327) from the received signal (315).

11. The method (400) of claim 10, wherein generating (400) the interference cancellation signal is performed as part of a successive interference cancellation operation.

12. The method (400) of claim 10 or 11, wherein generating (410) the interference cancellation signal includes:
demodulating the received signal (315) to generate a demodulated signal (322);
decoding the demodulated signal (322) to generate a decoded signal (328);
obtaining interference information from the decoded signal (328); and
generating the interference cancellation signal (327) based on the interference information.

13. The method (400) of claim 10 or 11, further comprising:
receiving a radio-frequency, RF, signal, wherein the WCD (111) is in a half-duplex mode when the RF signal is received;
down-converting the RF signal to generate a baseband signal (313); and
generating a digital baseband signal based on the baseband signal (313), wherein the digital baseband signal includes the received signal.

14. The method (400) of claim 10 or 11, wherein the first signal includes a downlink signal and the second signal includes an uplink signal, and the WCD (111) and the additional device (112) are near each other, such that the downlink signal received by the WCD is interfered with by the uplink signal.

15. A computer-readable storage medium for storing information, when executed, to implement a method or realize an apparatus as claimed in any preceding claim.

## Patentansprüche

1. Drahtloskommunikationsvorrichtung (111), WCD, umfassend:
einen Empfänger (310), um ein empfangenes Signal (315) zu erzeugen, wobei das empfangene Signal (315) mindestens ein erstes Signal aufweist, das durch eine Netzwerkstation (102), die in einem Vollduplexmodus arbeitet, an die WCD (111) gesendet wird, während die WCD (111) in einem Halbduplexmodus arbeitet; und **gekennzeichnet durch**:
ein Modul (320), um ein Interferenzunterdrückungssignal (327) für das empfangene Signal (315) basierend auf Interferenzinformationen zu erzeugen, die aus mindestens dem empfangenen Signal erhalten werden, wobei die Interferenzinformationen mit einem zweiten Signal (115) verknüpft sind, das durch eine zusätzliche Vorrichtung (112) an die Netzwerkvorrichtung (102) gesendet wird, wobei das erste Signal durch die Netzwerkstation (102) an die WCD im gleichen Zeitintervall gesendet wird, in dem das zweite Signal durch die zusätzliche Vorrichtung (112) gesendet wird, und das erste und das zweite Signal denselben Hochfrequenz-, HF, Träger aufweisen; und
einen Subtrahierer zum Subtrahieren des Interferenzunterdrückungssignals (327) vom empfangenen Signal (315), bevor das empfangene Signal an das Modul angelegt wird.

2. WCD (111) nach Anspruch 1, wobei das erste Signal ein durch die Netzwerkstation (102) an die WCD (111) gesendetes Downlinksignal aufweist und das zweite Signal ein durch die zusätzliche Vorrichtung (112) an die Netzwerkstation (102) gesendetes Uplinksignal aufweist.

3. WCD (111) nach Anspruch 1, wobei das erste Signal ein Downlinksignal aufweist, das durch die Netzwerkstation (102) basierend auf einer Orthogonal Frequency Division Multiple Access-, (OFDMA), Kommunikationstechnik an die WCD (111) gesendet wird.

4. WCD (111) nach Anspruch 1, wobei die WCD (111) eine Halbduplexvorrichtung ist und die Netzwerkstation (102) dazu eingerichtet ist, das erste Signal zu senden, während die Netzwerkstation das zweite Signal empfängt.

5. WCD (111) nach einem der Ansprüche 1 bis 4, wobei der Subtrahierer dazu eingerichtet ist:
das Interferenzunterdrückungssignal (327) von dem empfangenen Signal (315) subtrahieren, um ein resultierendes Signal zu erzeugen; und
das Modul dazu eingerichtet ist, das resultierende Signal zu decodieren, um ein Datensignal zu erzeugen, wobei das Datensignal Informationen in Zusammenhang mit dem ersten Signal aus der Netzwerkstation (102) aufweist.

6. WCD (111) nach einem der Ansprüche 1 bis 4, wobei das Modul (320) dazu eingerichtet ist, einen sukzessiven Interferenzauslöschungsvorgang durchzuführen, um die Interferenzinformationen zu erhalten.

7. WCD (111) nach einem der Ansprüche 1 bis 4, wobei der Empfänger (310) dazu eingerichtet ist:
ein Basisbandsignal (313) basierend auf einem Signal zu erzeugen, das durch eine mit dem Empfänger (310) gekoppelte Antenne (301) empfangen wird; und
ein digitales Basisbandsignal basierend auf dem Basisbandsignal (313) zu erzeugen, wobei das digitale Basisbandsignal das empfangene Signal (315) aufweist.

8. WCD (111) nach Anspruch 7, wobei das Modul (320) dazu eingerichtet ist:
das empfangene Signal (315) zu demodulieren, um ein demoduliertes Signal (322) zu erzeugen;
das demodulierte Signal (322) zu decodieren, um ein decodiertes Signal (328) zu erzeugen; und
die Interferenzinformationen basierend auf dem decodierten Signal (328) zu erhalten.

9. WCD (111) nach einem der Ansprüche 1 bis 4, wobei die Netzwerkstation (102) entweder eine Basisstation oder einen erweiterten Knoten B, eNB, aufweist.

10. Verfahren (400) zum Betreiben einer Drahtloskommunikationsvorrichtung (111), WCD, wobei das Verfahren umfasst:
Erzeugen (410) eines Interferenzunterdrückungssignals (327) basierend mindestens teilweise auf einem empfangenen Signal an einem Empfänger (310) der WCD, wobei das empfangene Signal mindestens ein erstes Signal enthält, das durch eine Netzwerkstation (102) an die WCD gesendet wird, und das Interferenzunterdrückungssignal (327) Informationen in Zusammenhang mit einem zweiten Signal enthält, das durch eine zusätzliche Vorrichtung (112) an die Netzwerkstation gesendet wird, wobei das erste und das zweite Signal während desselben Zeitintervalls gesendet werden und das erste und das zweite Signal denselben Hochfrequenz-, HF-, Träger aufweisen; und
Subtrahieren (412) des Interferenzunterdrückungssignals (327) vom empfangenen Signal (315).

11. Verfahren (400) nach Anspruch 10, wobei das Erzeugen (400) des Interferenzunterdrückungssignals als Teil eines sukzessiven Interferenzunterdrückungsvorgangs durchgeführt wird.

12. Verfahren (400) nach Anspruch 10 oder 11, wobei das Erzeugen (410) des Interferenzunterdrückungssignals aufweist:
Demodulieren des empfangenen Signals (315), um ein demoduliertes Signal (322) zu erzeugen;
Decodieren des demodulierten Signals (322), um ein decodiertes Signal (328) zu erzeugen;
Erhalten von Interferenzinformationen aus dem decodierten Signal (328); und
Erzeugen des Interferenzunterdrückungssignals (327) basierend auf den Interferenzinformationen.

13. Verfahren (400) nach Anspruch 10 oder 11, ferner umfassend:
Empfangen eines Hochfrequenz-, HF, Signals, wobei sich die WCD (111) in einem Halbduplexmodus befindet, wenn das HF-Signal empfangen wird;
Abwärtswandeln des HF-Signals, um ein Basisbandsignal zu erzeugen (313); und
Erzeugen eines digitalen Basisbandsignals basierend auf dem Basisbandsignal (313), wobei das digitale Basisbandsignal das empfangene Signal aufweist.

14. Verfahren (400) nach Anspruch 10 oder 11, wobei das erste Signal ein Downlinksignal und das zweite Signal ein Uplinksignal aufweist und die WCD (111) und die zusätzliche Vorrichtung (112) nahe beieinander liegen, sodass das durch die WCD empfangene Downlinksignal durch das Uplinksignal gestört wird.

15. Computerlesbares Speichermedium zum Speichern von Informationen, die beim Ausführen ein Verfahren implementieren oder eine Vorrichtung gemäß einem der vorhergehenden Ansprüche realisieren.

## Revendications

1. Dispositif de communication sans fil (111), WCD, comprenant :
un récepteur (310) destiné à générer un signal reçu (315), le signal reçu (315) comportant au moins un premier signal transmis au WCD (111) par une station de réseau (102) fonctionnant dans un mode duplex intégral tandis que le WCD (111) fonctionne dans un mode semi-duplex ; et **caractérisé par** :
un module (320) destiné à générer un signal d'annulation d'interférence (327) pour le signal reçu (315) sur la base d'informations d'interférence obtenues à partir au moins du signal reçu, les informations d'interférence étant associées à un deuxième signal (115) transmis à la station de réseau (102) par un dispositif additionnel (112), le premier signal étant transmis par la station de réseau (102) au WCD dans le même intervalle de temps que celui dans lequel le deuxième signal est transmis par le dispositif additionnel (112) et les premier et deuxième signaux comportant une même porteuse radiofréquence, RF ; et
un soustracteur destiné à soustraire le signal d'annulation d'interférence (327) au signal reçu (315) avant que le signal reçu soit appliqué au module.

2. WCD (111) selon la revendication 1, dans lequel le premier signal comporte un signal en liaison descendante transmis par la station de réseau (102) au WCD (111), et le deuxième signal comporte un signal en liaison montante transmis par le dispositif additionnel (112) à la station de réseau (102).

3. WCD (111) selon la revendication 1, dans lequel le premier signal comporte un signal en liaison descendante transmis par la station de réseau (102) au WCD (111) sur la base d'une technique de communication à accès multiple par répartition orthogonale de la fréquence, OFDMA.

4. WCD (111) selon la revendication 1, lequel WCD (111) est un dispositif semi-duplex, et dans lequel la station de réseau (102) est conçue pour transmettre le premier signal tandis que la station de réseau reçoit le deuxième signal.

5. WCD (111) selon l'une quelconque des revendications 1 à 4, dans lequel le soustracteur est conçu pour :
soustraire le signal d'annulation d'interférence (327) au signal reçu (315) afin de générer un signal résultant ; et
le module est conçu pour décoder le signal résultant afin de générer un signal de données, le signal de données comportant des informations associées au premier signal provenant de la station de réseau (102).

6. WCD (111) selon l'une quelconque des revendications 1 à 4, dans lequel le module (320) est conçu pour réaliser une opération d'annulation d'interférence successive afin d'obtenir les informations d'interférence.

7. WCD (111) selon l'une quelconque des revendications 1 à 4, dans lequel le récepteur (310) est conçu pour :
générer un signal en bande de base (313) sur la base d'un signal reçu par une antenne (301) couplée au récepteur (310) ; et
générer un signal numérique en bande de base sur la base du signal en bande de base (313), le signal numérique en bande de base comportant le signal reçu (315).

8. WCD (111) selon la revendication 7, dans lequel le module (320) est conçu pour :
démoduler le signal reçu (315) afin de générer un signal démodulé (322) ;
décoder le signal démodulé (322) afin de générer un signal décodé (328) ; et
obtenir les informations d'interférence sur la base du signal décodé (328).

9. WCD (111) selon l'une quelconque des revendications 1 à 4, dans lequel la station de réseau (102) comporte soit une station de base, soit un nœud B évolué, eNB.

10. Procédé (400) permettant de faire fonctionner un dispositif de communication sans fil (111), WCD, le procédé comprenant :
la génération (410) d'un signal d'annulation d'interférence (327) sur la base au moins en partie d'un signal reçu au niveau d'un récepteur (310) du WCD, le signal reçu comportant au moins un premier signal transmis au WCD par une station de réseau (102) et le signal d'annulation d'interférence (327) comportant des informations associées à un deuxième signal transmis par un dispositif additionnel (112) à la station de réseau, les premier et deuxième signaux étant transmis durant un même intervalle de temps et les premier et deuxième signaux comportant une même porteuse radiofréquence, RF ; et
la soustraction (412) du signal d'annulation d'interférence (327) au signal reçu (315).

11. Procédé (400) selon la revendication 10, dans lequel la génération (400) du signal d'annulation d'interférence est réalisée dans le cadre d'une opération d'annulation d'interférence successive.

12. Procédé (400) selon la revendication 10 ou 11, dans lequel la génération (410) du signal d'annulation d'interférence comporte :
la démodulation du signal reçu (315) afin de générer un signal démodulé (322) ;
le décodage du signal démodulé (322) afin de générer un signal décodé (328) ;
l'obtention d'informations d'interférence à partir du signal décodé (328) ; et
la génération du signal d'annulation d'interférence (327) sur la base des informations d'interférence.

13. Procédé (400) selon la revendication 10 ou 11, comprenant en outre :
la réception d'un signal radiofréquence, RF, le WCD (111) se trouvant dans un mode semi-duplex au moment de la réception du signal RF ;
la conversion par abaissement de fréquence du signal RF afin de générer un signal en bande de base (313) ; et
la génération d'un signal numérique en bande de base sur la base du signal en bande de base (313), le signal numérique en bande de base comportant le signal reçu.

14. Procédé (400) selon la revendication 10 ou 11, dans lequel le premier signal comporte un signal en liaison descendante et le deuxième signal comporte un signal en liaison montante, et le WCD (111) et le dispositif additionnel (112) sont proches l'un de l'autre si bien que le signal en liaison descendante reçu par le WCD est interféré par le signal en liaison montante.

15. Support de stockage lisible par ordinateur pour le stockage d'informations dont l'exécution donne lieu à la mise en œuvre d'un procédé ou la matérialisation d'un appareil selon l'une quelconque des revendications précédentes.
